# EUROPEAN PATENT SPECIFICATION

(11) **EP 4 220 797 B1**
(45) Date of publication and mention of the grant of the patent: **27.11.2024**
(21) Application number: 21946251.2
(22) Date of filing: 30.11.2021
(51) Int. Cl.: H01M 10/05, H01M 4/131, H01M 4/134, H01M 4/36, H01M 4/38, H01M 4/485, H01M 4/505, H01M 4/525, H01M 10/0525, H01M 10/054, H01M 4/02

(54) **SECONDARY BATTERY, BATTERY MODULE, BATTERY PACK AND POWER CONSUMING DEVICE**
SEKUNDÄRBATTERIE, BATTERIEMODUL, BATTERIEPACK UND STROMVERBRAUCHENDE VORRICHTUNG
BATTERIE SECONDAIRE, MODULE DE BATTERIE, BLOC-BATTERIE ET DISPOSITIF CONSOMMATEUR D'ÉNERGIE

(43) Date of publication of application: 02.08.2023
(73) Proprietor: Contemporary Amperex Technology (Hong Kong) Limited, Central, Central And Western District (HK)
(72) Inventor: FU, Hanli, Ningde City Fujian 352100 (CN); LI, Zhenhua, Ningde City Fujian 352100 (CN); XU, Jiawei, Ningde City Fujian 352100 (CN); YANG, Ziyu, Ningde City Fujian 352100 (CN); XU, Shuoyan, Ningde City Fujian 352100 (CN); GUO, Qiang, Ningde City Fujian 352100 (CN); LI, Xing, Ningde City Fujian 352100 (CN); NIU, Shaojun, Ningde City Fujian 352100 (CN); JIN, Haizu, Ningde City Fujian 352100 (CN)
(74) Representative: Gong, Jinping
(86) International application number: PCT/CN2021/134499
(87) International publication number: WO 2023/097474

(56) References cited:
- WO-A1-2009/141850
- CN-A- 107 534 180
- CN-A- 110 137 457
- CN-A- 110 880 617
- CN-A- 111 129 450
- JP-A- 2019 528 550
- US-A1- 2012 282 524
- US-B2- 10 998 574

## Description

### Technical Field

The present application belongs to the field of battery technologies, and specifically relates to a secondary battery as specified in any of claims 1-11, a battery module as specified in claim 12, a battery pack as specified in claim 13 and a power consuming device as specified in claim 14.

### Background Art

In recent years, secondary batteries have been widely used in energy storage power systems such as hydroelectric, thermal, wind and solar power plants, as well as electric tools, electric bicycles, electric motorcycles, electric vehicles, military equipment, aerospace and other fields. With the application and popularization of secondary batteries, the energy density thereof has attracted more and more attention. The energy density of secondary batteries is closely related to the capacities per gram of positive electrode active materials and negative electrode active materials. At present, no matter what positive electrode active material is selected, the improvement of the energy density of secondary batteries is very limited. Therefore, researchers have considered using negative electrode active materials with a high capacity per gram to improve the overall energy density of secondary batteries. Graphite is the most commonly used negative electrode active material, but the theoretical capacity per gram thereof is only 372 mAh/g, which has been difficult to meet the actual needs of high energy density secondary batteries. Among non-carbon negative electrode active materials, silicon-based materials and tin-based materials have become one of the most promising negative electrode active materials due to the ultra-high capacity (for example, the theoretical capacity per gram of silicon is 4200 mAh/g, and the theoretical capacity per gram of tin is 990 mAh/g) and low costs. However, silicon-based materials and tin-based materials will undergo huge volume changes during the charging/discharging, resulting in poor cycling performance and storage performance of secondary batteries, and these silicon-based materials and tin-based materials are currently difficult to be commercially used on a large scale. US 2012/282524 A1 mentions a nonaqueous secondary battery. JP 2019 528550 A describes secondary electrochemical cells containing non-aqueous electrolytes and metal anodes. US 10 998 574 B2 states a non-aqueious electrolyte magnesium secondary battery.

### Summary of the Invention

An object of the present application is to provide a secondary battery, a battery module, a battery pack, and a power consuming device as specified in the amended claim set, aiming to enable the secondary battery to have a high energy density as well as significantly improved cycling performance and storage performance.

A first aspect of the present application provides a secondary battery as specified in any of claims 1-11, comprising a negative electrode plate and a positive electrode plate, wherein the negative electrode plate comprises a negative electrode current collector and a negative electrode film layer provided on at least one surface of the negative electrode current collector, the negative electrode film layer comprising a negative electrode active material, and the positive electrode plate comprises a positive electrode current collector and a positive electrode film layer provided on at least one surface of the positive electrode current collector, the positive electrode film layer comprising a positive electrode active material, wherein the negative electrode active material comprises a first negative electrode active material, which is selected from one or more of a silicon-based material and a tin-based material, and the positive electrode active material comprises a first positive electrode active material, which has a molecular formula of M1ₓMn_{y}M2_{z}OₐA_{b}, wherein M1 represents one or both of Mg and Al, and M2 represents one or both of Co and Ni, A represents one or more of N, P and S, 0 < x ≤ 3,0 < y ≤ 6,0 ≤ z ≤ 6,0 < y + z ≤ 8,0 < a ≤ 12,0 ≤ b ≤ 12, and 0 < a + b ≤ 15.

When the positive electrode active material comprises the first positive electrode active material having a molecular formula of M1ₓMn_{y}M2_{z}OₐA_{b}, the first positive electrode active material can reserve more expandable space for the silicon-based material and the tin-based material, such that the negative effect of volume expansion of the silicon-based material and the tin-based material are reduced, and thus the secondary battery of the present application can have a high energy density as well as significantly improved cycling performance and storage performance.

In any embodiment of the present application, the mass content percentage of the first positive electrode active material is 2%-70%, based on the total mass of the positive electrode film layer. Optionally, the mass content percentage of the first positive electrode active material is 2.4%-55%. When the mass content percentage of the first positive electrode active material is within a suitable range, the negative effect of the volume expansion of the silicon-based material and the tin-based material can be effectively reduced, and the cycling performance and storage performance of the secondary battery can be further improved.

In any embodiment of the present application, the mass ratio of the first positive electrode active material to the first negative electrode active material is (0.48-0.70) : 1. When the mass ratio of the first positive electrode active material to the first negative electrode active material is within a suitable range, the secondary battery can be ensured to have a high energy density as well as significantly improved cycling performance and storage performance.

In any embodiment of the present application, the mass content percentage of the first negative electrode active material is 5%-50%, based on the total mass of the negative electrode film layer. Optionally, the mass content percentage of the first negative electrode active material is 5%-29%. When the mass content percentage of the first negative electrode active material is within a suitable range, the secondary battery can be ensured to have a high energy density as well as significantly improved cycling performance and storage performance.

In any embodiment of the present application, 0 < y ≤ 3.

In any embodiment of the present application, 0 < z ≤ 1.

In any embodiment of the present application, 0 < a ≤ 5.

In any embodiment of the present application, 0 < b ≤ 1.

In any embodiment of the present application, the first positive electrode active material has a spinel structure and/or a layered structure, which facilitates to the deintercalation and intercalation of M1 ions.

In any embodiment of the present application, the first positive electrode active material comprises one or more of MgMn₂O₄, Mg₂Mn₂O₄, Al₂Mn₂O₅, MgAlMnO₄, Mg₂AlMnO₅, Mg₂Mn_{1.5}Ni_{0.5}O₄, and Mg₂Mn_{1.5}Ni_{0.5}O_{3.2}S_{0.8}.

In any embodiment of the present application, the first positive electrode active material has volume-average particle size Dv50 of 8 µm-20 µm. When the volume-average particle size Dv50 of the first positive electrode active material is within a suitable range, the negative effect of the volume expansion of the silicon-based material and the tin-based material can be effectively reduced, and the cycling performance and storage performance of the secondary battery can be further improved.

In any embodiment of the present application, the first positive electrode active material has a specific surface area of 0.2 m²/g-0.9 m²/g. When the specific surface area of the first positive electrode active material is within a suitable range, the negative effect of the volume expansion of the silicon-based material and the tin-based material can be effectively reduced, and the cycling performance and storage performance of the secondary battery can be further improved.

In any embodiment of the present application, the silicon-based material comprises one or more of elemental silicon, silicon oxides, silicon carbon composites, silicon nitrogen composites and silicon alloy materials.

In any embodiment of the present application, the tin-based material comprises one or more of elemental tin, tin oxides, tin carbon composites, and tin alloy materials.

In any embodiment of the present application, the secondary battery is a lithium ion battery, a sodium ion battery, a potassium ion battery, a zinc ion battery, a calcium ion battery, or a barium ion battery.

A second aspect of the present application provides a battery module, comprising the secondary battery of the first aspect of the present application.

A third aspect of the present application provides a battery pack, comprising one of the secondary battery of the first aspect of the present application and the battery module of the second aspect of the present application.

A fourth aspect of the present application provides a power consuming device, comprising at least one of the secondary battery of the first aspect, the battery module of the second aspect, and the battery pack of the third aspect of the present application.

The positive electrode plate of the secondary battery of the present application comprises the first positive electrode active material having a molecular formula of M1ₓMn_{y}M2_{z}OₐA_{b}, which can reserve more expandable space for the silicon-based material and the tin-based material, such that the negative effect of volume expansion of the silicon-based material and the tin-based material are reduced, and thus the secondary battery of the present application can have a high energy density as well as significantly improved cycling performance and storage performance. The battery module, the battery pack and the power consuming device of the present application comprise the secondary battery provided by the present application, and thus have at least the same advantages as the secondary battery.

### Brief Description of the Drawings

In order to illustrate the technical solutions of the examples of the present application more clearly, the drawings used in the examples of the present application will be described briefly below. Apparently, the drawings described below are merely some embodiments of the present application, and those of ordinary skill in the art may derive other drawings from these drawings without creative efforts.
Fig. 1 is a schematic diagram of an embodiment of the secondary battery of the present application.
Fig. 2 is an exploded schematic diagram of the embodiment of the secondary battery shown in Fig. 1.
Fig. 3 is a schematic diagram of an embodiment of the battery module of the present application.
Fig. 4 is a schematic diagram of an embodiment of the battery pack of the present application.
Fig. 5 is an exploded schematic diagram of the embodiment of the battery pack shown in Fig. 4.
Fig. 6 is a schematic diagram of an embodiment of a power consuming device comprising the secondary battery of the present application as a power supply.

In the drawings, the figures may not be drawn to the actual scale.

### Detailed Description of Embodiments

Hereafter, embodiments of the secondary battery, battery module, battery pack, and power consuming device of the present application are specifically disclosed in the detailed description with reference to the accompanying drawings as appropriate. However, unnecessary detailed illustrations may be omitted in some instances. For example, there are situations where detailed description of well known items and repeated description of actually identical structures are omitted. This is to prevent the following description from being unnecessarily verbose, and facilitates understanding by those skilled in the art. Moreover, the accompanying drawings and the descriptions below are provided for enabling those skilled in the art to fully understand the present application, rather than limiting the subject matter disclosed in claims.

"Ranges" disclosed in the present application are defined in the form of lower and upper limits, and a given range is defined by selection of a lower limit and an upper limit, the selected lower and upper limits defining the boundaries of the particular range. Ranges defined in this manner may be inclusive or exclusive, and may be arbitrarily combined, that is, any lower limit may be combined with any upper limit to form a range. For example, if the ranges of 60-120 and 80-110 are listed for a particular parameter, it should be understood that the ranges of 60-110 and 80-120 are also contemplated. Additionally, if minimum range values 1 and 2 are listed, and maximum range values 3, 4, and 5 are listed, the following ranges are all contemplated: 1-3, 1-4, 1-5, 2-3, 2-4, and 2-5. In the present application, unless stated otherwise, the numerical range "a-b" denotes an abbreviated representation of any combination of real numbers between a and b, where both a and b are real numbers. For example, the numerical range "0-5" means that all real numbers between "0-5" have been listed herein, and "0-5" is just an abbreviated representation of combinations of these numerical values. In addition, when a parameter is expressed as an integer of ≥ 2, it is equivalent to disclosing that the parameter is, for example, an integer of 2, 3, 4, 5, 6, 7, 8, 9, 10, 11, 12, and the like.

Unless otherwise stated, all the embodiments and optional embodiments of the present application can be combined with one another to form new technical solutions, and such technical solutions should be considered to be included in the disclosure content of the present application.

Unless otherwise stated, all technical features and optional technical features of the present application can be combined with one another to form new technical solutions, and such technical solutions should be considered to be included in the disclosure content of the present application.

Unless otherwise stated, all the steps of the present application can be performed sequentially or randomly, preferably sequentially. For example, the method including steps (a) and (b) indicates that the method may include steps (a) and (b) performed sequentially, and may also include steps (b) and (a) performed sequentially. For example, reference to "the method may further include step (c)" indicates that step (c) may be added to the method in any order, e.g., the method may include steps (a), (b) and (c), steps (a), (c) and (b), and also steps (c), (a) and (b), etc.

The terms "comprise" and "include" mentioned in the present application are open-ended or closed-ended, unless otherwise stated. For example, "comprise" and "include" may mean that other components not listed may further be comprised or included, or only the listed components may be comprised or included.

In the present application, the term "or" is inclusive unless otherwise specified. For example, the phrase "A or B" means "A, B, or both A and B". More specifically, a condition "A or B" is satisfied by any one of the following: A is true (or present) and B is false (or not present); A is false (or not present) and B is true (or present); or both A and B are true (or present).

In the present application, the term "silicon-based material" refers to a class of negative electrode active materials containing a silicon element and having a high capacity per gram, which may include but not limited to one or more of elemental silicon, silicon oxides, silicon carbon composites, silicon nitrogen composites and silicon alloy materials, unless otherwise stated.

In the present application, the term "tin-based material" refers to a class of negative electrode active materials containing a tin element and having a high capacity per gram, which may include but not limited to one or more of elemental tin, tin oxides, tin carbon composites, and tin alloy materials, unless otherwise stated.

In the present application, the term "active ion" refers to an ion that can be intercalated and deintercalated back and forth between the positive and negative electrodes of a secondary battery, including but not limited to a lithium ion, a sodium ion, a potassium ion, a zinc ion, a calcium ion or a barium ion, unless otherwise stated.

A secondary battery, also known as a rechargeable battery or an accumulator, refers to a battery of which active materials can be activated by means of charging for reuse of the battery after the battery is discharged. Generally, the secondary battery comprises a positive electrode plate, a negative electrode plate, a separator and an electrolyte. During the charge/discharge process of the battery, active ions are intercalated and de-intercalated back and forth between the positive electrode plate and the negative electrode plate. The separator is provided between the positive electrode plate and the negative electrode plate, and mainly prevents the positive and negative electrodes from short-circuiting and enables active ions to pass through. The electrolyte is provided between the positive electrode plate and the negative electrode plate and functions for active ion conduction. At present, secondary batteries have been widely used in energy storage power systems such as hydroelectric, thermal, wind and solar power plants, as well as electric tools, electric bicycles, electric motorcycles, electric vehicles, military equipment, aerospace and other fields. In order to better adapt to the sustainable development strategy of environment and energy, it is necessary for secondary batteries to satisfy a high energy density as well as excellent cycling performance and storage performance at the same time.

The theoretical capacity per gram of silicon is 4200 mAh/g, and the theoretical capacity per gram of tin is 990 mAh/g, which are both much higher than the theoretical capacity per gram of graphite of 372 mAh/g. Therefore, both of the silicon and tin are negative electrode active materials with potential application values for high energy density secondary batteries. However, silicon and tin will undergo huge volume changes during the charging/discharging, resulting in a larger stress inside the negative electrode active material particles, the negative electrode active material tends to pulverization and shedding from the negative electrode film layer, such that the capacity of the secondary battery tends to attenuate rapidly, and the cycling performance is deteriorated. Silicon and tin also tend to squeeze an electrode plate (e.g., a positive electrode plate and a negative electrode plate) when undergo huge volume changes during the charging/discharging, thereby increasing the risk of the electrode plate being fractured. In addition, when silicon and tin undergo a huge volume change during the charging/discharging, the porosity of the electrode plate is easily reduced due to the squeezing, such that the internal resistance of the secondary battery increases, and active ions (e.g. lithium ions, etc.) are easily reduced and precipitated on the surface of the negative electrode plate, which seriously affects the safety performance of the secondary battery.

Although the preparation of silicon (or tin) as oxides or the formation of silicon (or tin) and other materials (for example, carbon materials) into composites can inhibit the volume changes during the charging/discharging to an extent, the technical effect is limited, and the improvement of the cycling performance of secondary batteries is not obvious.

By in-depth research, the inventors of the present application have proposed a technical solution that can effectively reduce the negative effects of volume expansion of silicon-based materials and tin-based materials, and enable the secondary battery to have significantly improved cycling performance and storage performance, and to be suitable for large-scale commercialization.

The first aspect of embodiments of the present application provides a secondary battery comprising a negative electrode plate and a positive electrode plate, wherein the negative electrode plate comprises a negative electrode current collector and a negative electrode film layer provided on at least one surface of the negative electrode current collector, the negative electrode film layer comprising a negative electrode active material, and the positive electrode plate comprises a positive electrode current collector and a positive electrode film layer provided on at least one surface of the positive electrode current collector, the positive electrode film layer comprising a positive electrode active material, wherein the negative electrode active material comprises a first negative electrode active material, which is selected from one or more of a silicon-based material and a tin-based material, and the positive electrode active material comprises a first positive electrode active material, which has a molecular formula of M1ₓMn_{y}M2_{z}OₐA_{b}, wherein M1 represents one or both of Mg and Al, and M2 represents one or both of Co and Ni, A represents one or more of N, P and S, 0 < x ≤ 3, 0 < y ≤ 6, 0 ≤ z ≤ 6, 0 < y + z ≤ 8, 0 < a ≤ 12, 0 ≤ b ≤ 12, and 0 < a + b ≤ 15.

The type of the secondary battery is not particularly limited in the present application. For example, the secondary battery may be a lithium ion battery, a sodium ion battery, a potassium ion battery, a zinc ion battery, a calcium ion battery or a barium ion battery.

In the secondary battery of the present application, the negative electrode active material comprises one or more of a silicon-based material and a tin-based material. Therefore, the secondary battery of the present application can have the advantage of a high energy density.

In the secondary battery of the present application, the positive electrode active material comprises a first positive electrode active material having a molecular formula of M1ₓMn_{y}M2_{z}OₐA_{b}, wherein M1 represents one or both of Mg and Al, and the radius of M1 ion is smaller than that of an active ion (e.g., a lithium ion, a sodium ion, a potassium ion, a zinc ion, a calcium ion or a barium ion, etc.). During the charging of the secondary battery, the M1 ion can precede over the active ion to react with a silicon-based material and a tin-based material to form an alloyed product. Since the radius of the M1 ion is smaller than that of the active ion, the alloyed products formed by the participation of M1 ion can have a smaller volume expansion, such that the negative electrode active material does not easily pulverized, which can inhibit the rapid attenuation of the capacity of the secondary battery and significantly improve the cycling performance, storage performance and safety performance of the secondary battery. The alloyed products formed by the M1 ion has a smaller volume expansion, which enable the active ion to have more expandable space during the reaction of the active ion with the silicon-based material and the tin-based material to form the alloyed product.

Therefore, when the positive electrode active material comprises the first positive electrode active material having a molecular formula of M1ₓMn_{y}M2_{z}OₐA_{b}, the first positive electrode active material can reserve more expandable space for the silicon-based material and the tin-based material, such that the negative effect of volume expansion of the silicon-based material and the tin-based material are reduced, for example, the volume change rate of the silicon-based material and the tin-based material is reduced, the probability of pulverization of the silicon-based material and the tin-based material is reduced, the probability of fracture of an electrode plate is reduced, the probability of reduction and precipitation of an active ion on the surface of the negative electrode plate is reduced, etc., and thus the secondary battery of the present application can have a high energy density as well as significantly improved cycling performance and storage performance.

M1 ions can also precede over the active ion to react with the silicon-based material and the tin-based material to form electrochemically inactive porous materials of M1-O, M1-N, M1-Si-O, M1-Si-N, M1-Sn-O, etc., (e.g., MgO, Mg₂SiO₄, Mg₂SiO₃, etc.). These porous materials hardly participate in the reaction during the subsequent cycle, but can function for buffering the volume expansion, inhibiting the pulverization of the negative electrode active material, stabilizing the solid electrolyte interface film (SEI film) on the surface of the negative electrode active material and reducing the continuous irreversible consumption of the active ions, such that the cycling performance and storage performance of the secondary battery are improved.

The secondary battery of the present application has a simple preparation process, a high energy density, and excellent cycling performance and storage performance, and is suitable for large-scale commercialization.

In some embodiments, 0 < y ≤ 5, 0 < y ≤ 4, 0 < y ≤ 3, or 0 < y ≤ 2.

In some embodiments, z = 0.

In some embodiments, 0 < z ≤ 6. Optionally, 0 < z ≤ 5, 0 < z ≤ 4, 0 < z ≤ 3, 0 < z ≤ 2, or 0 < z ≤ 1.

In some embodiments, 0 < y ≤ 6 and z = 0.

In some embodiments, 0 < y ≤ 3 and z = 0.

In some embodiments, 0 < y ≤ 3, 0 < z ≤ 1, and 0 < y + z ≤ 4.

In some embodiments, 0 < y ≤ 6, 0 < z ≤ 1, and 0 < y + z ≤ 7.

In some embodiments, 0 < a ≤ 10, 0 < a ≤ 9, 0 < a ≤ 8, 0 < a ≤ 7, 0 < a ≤ 6, 0 < a ≤ 5 or0 < a ≤ 4.

In some embodiments, b = 0.

In some embodiments, 0 < b ≤ 12, and optionally, 0 < b ≤ 10, 0 < b ≤ 8, 0 < b ≤ 6, or 0 < b ≤ 4, 0 < b ≤ 2, or 0 < b ≤ 1.

In some embodiments, 0 < a ≤ 12 and b = 0.

In some embodiments, 0 < a ≤ 5 and b = 0.

In some embodiments, 0 < a ≤ 5, 0 < b ≤ 1, and 0 < a + b ≤ 6.

In some embodiments, 0 < a ≤ 12, 0 < b ≤ 2, and 0 < a + b ≤ 14.

In some embodiments, 0 < x ≤ 3, 0 < y ≤ 3, z = 0, 0 < a ≤ 5, and b = 0.

In some embodiments, 0 < x ≤ 3, 0 < y ≤ 3, 0 < z ≤ 1, 0 < a ≤ 5, and b = 0.

In some embodiments, 0 < x ≤ 3, 0 < y ≤ 3, z = 0, 0 < a ≤ 5, and 0 < b ≤ 1.

In some embodiments, 0 < x ≤ 3, 0 < y ≤ 3, 0 < z ≤ 1, 0 < a ≤ 5, and 0 < b ≤ 1.

In some embodiments, M1 represents Mg.

In some embodiments, M1 represents Al.

In some embodiments, M1 represents a combination of Mg and Al.

In some embodiments, as an example, the first positive electrode active material comprises one or more of MgMn₂O₄, Mg₂Mn₂O₄, Al₂Mn₂O₅, MgAlMnO₄, Mg₂AlMnO₅, Mg₂Mn_{1.5}Ni_{0.5}O₄, and Mg₂Mn_{1.5}Ni_{0.5}O_{3.2}S_{0.8}.

In some embodiments, the first positive electrode active material has a spinel structure and/or a layered structure. M1ₓMn_{y}M2_{z}OₐA_{b} has a spinel structure or a layered structure, which facilitates the deintercalation and intercalation of M1 ions.

In some embodiments, the first positive electrode active material has a volume-average particle size Dv50 of 8 µm to 20 µm. For example, the first positive electrode active material has a volume-average particle size Dv50 of 8 µm, 10 µm, 12 µm, 14 µm, 16 µm, 18 µm, 20 µm or a range constituted by any of the above values. Optionally, the first positive electrode active material has a volume-average particle size Dv50 of 8 µm-18 µm, 8 µm-16 µm, 8 µm-14 µm, 8 µm-12 µm, 8 µm-10 µm, 10 µm-20 µm, 10 µm-18 µm, 10 µm-16 µm, 10 µm-14 µm, 10 µm-12 µm, 12 µm-20 µm, 12 µm-18 µm, 12 µm-16 µm, 12 µm-14 µm, 14 µm-20 µm, 14 µm-18 µm, 14 µm-16 µm, 16 µm-20 µm, 16 µm-18 µm, or 18 µm-20 µm. When the volume-average particle size Dv50 of the first positive electrode active material is larger, the first positive electrode active material may have a higher tap density, but at the moment, the crystal structure of the first positive electrode active material easily deforms, resulting in a decrease in the capacity per gram, which may reduce the cycling performance and storage performance of the secondary battery. When the volume-average particle size Dv50 of the first positive electrode active material is smaller, the boundary between the first positive electrode active material particles increases and the difficulty of electron transmission increases, such that the polarization of the secondary battery may be increased and the cycling performance and storage performance of the secondary battery are reduced. When the volume-average particle size Dv50 of the first positive electrode active material is within a suitable range, the negative effect of the volume expansion of the silicon-based material and the tin-based material can be effectively reduced, and the cycling performance and storage performance of the secondary battery can be further improved.

In the present application, the volume-average particle size Dv50 of the first positive electrode active material has the well-known meaning in the art, represents the particle size corresponding to the cumulative volume distribution percentage of the material reaching 50%, and can be measured by instruments and methods known in the art. For example, it can be conveniently measured by a laser particle size analyzer, such as the Mastersizer 2000E laser particle size analyzer of Malvern Instruments Co., Ltd., UK, with reference to GB/T 19077-2016 Particle Size Distribution - Laser Diffraction Method.

In some embodiments, the first positive electrode active material has a specific surface area of 0.2 m²/g- 0.9 m²/g. For example, the first positive electrode active material has a specific surface area of 0.2 m²/g, 0.3 m²/g, 0.4 m²/g, 0.5 m²/g, 0.6 m²/g, 0.7 m²/g, 0.8 m²/g, 0.9 m²/g or a range constituted by any of the above values. Optionally, the first positive electrode active material has a specific surface area of 0.2 m²/g-0.8 m²/g, 0.2 m²/g-0.7 m²/g, 0.2 m²/g-0.6 m²/g, 0.2 m²/g-0.5 m²/g, 0.2 m²/g-0.4 m²/g, 0.2 m²/g-0.3 m²/g, 0.3 m²/g-0.9 m²/g, 0.3 m²/g-0.8 m²/g, 0.3 m²/g-0.7 m²/g, 0.3 m²/g-0.6 m²/g, 0.3 m²/g-0.5 m²/g, 0.3 m²/g-0.4 m²/g, 0.4 m²/g-0.9 m²/g, 0.4 m²/g-0.8 m²/g, 0.4 m²/g-0.7 m²/g, 0.4 m²/g-0.6 m²/g, 0.4 m²/g-0.5 m²/g, 0.5 m²/g-0.9 m²/g, 0.5 m²/g-0.8 m²/g, 0.5 m²/g-0.7 m²/g, 0.5 m²/g-0.6 m²/g, 0.6 m²/g-0.9 m²/g, 0.6 m²/g-0.8 m²/g, 0.6 m²/g-0.7 m²/g, 0.7 m²/g-0.9 m²/g, 0.7 m²/g-0.8 m²/g, or 0.8 m²/g-0.9 m²/g. When the specific surface area of the first positive electrode active material is larger, more M1 ions are lost during the cycling of the secondary battery, such that the content of the active M1 ions is reduced, which is not conducive to reducing the negative effect of the volume expansion of the silicon-based material and the tin-based material. When the specific surface area of the first positive electrode active material is lower, the infiltration of first positive electrode active material in the electrolyte is poor, which is not conducive to the deintercalation and intercalation of the M1 ion, such that the cycling performance and storage performance of the secondary battery are poor. When the specific surface area of the first positive electrode active material is within a suitable range, the negative effect of the volume expansion of the silicon-based material and the tin-based material can be effectively reduced, and the cycling performance and storage performance of the secondary battery can be further improved.

In the present application, the specific surface area of the first positive electrode active material has the well-known meaning in the art, and can be measured by instruments and methods known in the art. For example, it can be measured with reference to GB/T 19587-2017 using the nitrogen adsorption specific surface area analysis test method, and calculated by the BET (BrunauerEmmett Teller) method, wherein the nitrogen adsorption specific surface area analysis test can be conducted by the Model Tri-Star 3020 specific surface area pore size analysis tester from Micromeritics Company in the United States.

The first positive electrode active material M1ₓMn_{y}M2_{z}OₐA_{b} can be prepared according to a method well known in the art. An exemplary preparation method comprises the steps of: mixing an Mn source and an ammonium salt in a ratio, followed by filtering and drying to obtain a precursor; adding the precursor to a reducing solvent for reduction to obtain a sol; aging the sol and an optional M2 element precursor at a temperature for a time to obtain a gel; subjecting the gel to an ion exchange reaction with an aqueous M1 element precursor solution, then transferring same to a reaction kettle, and then continuing a hydrothermal reaction with an optional A element precursor at a temperature for a time to obtain a precipitate; and subjecting the precipitate to filtering, washing, and drying to obtain a first positive electrode active material with a molecular formula of M1ₓMn_{y}M2_{z}OₐA_{b}.

As examples, the Mn source includes, but are not limited to, potassium permanganate; the ammonium salt includes, but are not limited to one or more of tetramethylammonium bromide, tetraethylammonium bromide, tetrapropylammonium bromide, and tetrabutylammonium bromide; the A element precursor includes, but are not limited to one or more of ammonium nitrate, ammonium nitrite, ammonium carbonate, ammonium bicarbonate, ammonium phosphate, phosphoric acid, ammonium sulfate, ammonium bisulfate, ammonium hydrogen sulfite, ammonium sulfite, ammonium hydrosulfide, hydrogen sulfide, sodium sulfide, ammonium sulfide and elemental sulfur; the M1 element precursor includes, but are not limited to, one or more of hydrochloride, nitrate, and sulfate of the M1 element, e.g., one or more of magnesium chloride, magnesium nitrate, magnesium sulfate, aluminum chloride, and aluminum nitrate; the M2 element precursor includes, but are not limited to, one or more of hydrochloride, nitrate, sulfate, and acetate of the M2 element, e.g., one or more of cobalt acetate, nickel acetate, etc.

As an example, the reducing solvent for reducing the precursor may be a mixed solvent composed of water and sec-butanol. Optionally, the volume ratio of water to sec-butanol is 1 : 1-1 : 5.

As an example, the aging temperature of the sol is 60°C-80°C, and the aging time is 24 h-48 h.

As an example, the ion exchange time between the gel and the aqueous M1 element precursor solution is 1 h-8 h.

As an example, the hydrothermal reaction temperature is 100°C-250°C, optionally 150°C-200°C; the hydrothermal reaction time is 4 h-40 h.

In some embodiments, the mass content percentage of the first positive electrode active material is 2%-70%, based on the total mass of the positive electrode film layer. For example, the mass content percentage of the first positive electrode active material is 2%, 2.4%, 3%, 4%, 5%, 6%, 7%, 8%, 9%, 10%, 15%, 20%, 25%, 30%, 35%, 40%, 45%, 50%, 55%, 60%, 65%, 70% or a range constituted by any of the above values. Optionally, the mass content percentage of the first positive electrode active material is 2%-65%, 2%-60%, 2%-55%, 2%-50%, 2%-45%, 2%- 40%, 2%-35%, 2%-30%, 2%-25%, 2%-20%, 2%-15%, 2%-10%, 2.4%-70%, 2.4%-65%, 2.4%-60%, 2.4%-55%, 2.4%-50%, 2.4%-45%, 2.4%-40%, 2.4%-35%, 2.4%-30%, 2.4%-25%, 2.4%-20%, 2.4%-15%, 2.4%-10%, 3%-70%, 3%-65%, 3%-60%, 3%-55%, 3%-50%, 3%- 45%, 3%-40%, 3%-35%, 3%-30%, 3%-25%, 3%-20%, 3%-15%, or 3%-10%. When the mass content percentage of the first positive electrode active material is lower, the negative effect of the volume expansion of the silicon-based material and the tin-based material may not be effectively reduced, and the cycling performance and storage performance of the secondary battery are not significantly improved. When the mass content percentage of the first positive electrode active material is higher, an SEI film with insulating properties is easily formed on the surface of the negative electrode active material, which hinders the deintercalation and intercalation of the active ions, and at the same time, more side reactions occur between the first positive electrode active material and the electrolyte. Therefore, the cycling performance and storage performance of the secondary battery cannot be effectively improved. When the mass content percentage of the first positive electrode active material is within a suitable range, the negative effect of the volume expansion of the silicon-based material and the tin-based material can be effectively reduced, and the cycling performance and storage performance of the secondary battery can be further improved.

In some embodiments, the mass ratio of the first positive electrode active material to the first negative electrode active material is (0.48-0.70) : 1. For example, the mass ratio of the first positive electrode active material to the first negative electrode active material is 0.48 : 1, 0.50 : 1, 0.52 : 1, 0.54 : 1, 0.56 : 1, 0.58 : 1, 0.60 : 1, 0.62 : 1, 0.64 : 1, 0.66 : 1, 0.68 : 1, 0.70 : 1 or a range constituted by any of the above values. Optionally, the mass ratio of the first positive electrode active material to the first negative electrode active material is (0.48-0.68) : 1, (0.48-0.66) : 1, (0.48-0.64) : 1, (0.48-0.62) : 1,(0.48-0.60) : 1, (0.48-0.58) : 1, (0.48-0.56) : 1, (0.48-0.54) : 1, (0.48-0.52) : 1, (0.50-0.70) : 1, (0.50-0.68) : 1, (0.50-0.66) : 1, (0.50-0.64) : 1, (0.50-0.62) : 1, (0.50-0.60) : 1, (0.50-0.58) : 1, (0.50-0.56) : 1, (0.50-0.54) : 1, (0.52-0.70) : 1, (0.52-0.68) : 1, (0.52-0.66) : 1, (0.52-0.64) : 1, (0.52-0.62) : 1, (0.52-0.60) : 1, (0.52-0.58) : 1, (0.52-0.56) : 1, (0.54-0.70) : 1, (0.54-0.68) : 1, (0.54- 0.66) : 1, (0.54-0.64) : 1, (0.54-0.62) : 1, (0.54-0.60) : 1, or (0.54-0.58) : 1. When the mass ratio of the first positive electrode active material to the first negative electrode active material is within a suitable range, the first positive electrode active material and the first negative electrode active material have a better cooperative effect, such that the secondary battery is ensured to have a high energy density as well as significantly improved cycling performance and storage performance.

In some embodiments, the first negative electrode active material is a silicon-based material, and the mass ratio of the first positive electrode active material to the silicon-based material is (0.48-0.70) : 1.

In some embodiments, the first negative electrode active material is a tin-based material, and the mass ratio of the first positive electrode active material to the silicon-based material is (0.48-0.70) : 1.

In some embodiments, the first negative electrode active material is a combination of a silicon-based material and a tin-based material, and the ratio of the mass of the first positive electrode active material to the sum of the mass of the silicon-based material and the tin-based material is (0.48-0.70) : 1.

In some embodiments, the mass content percentage of the first negative electrode active material is 5% to 50%, based on the total mass of the negative electrode film layer. For example, the mass content percentage of the first negative electrode active material is 5%, 6%, 7%, 8%, 9%, 10%, 11%, 12%, 13%, 14%, 15%, 16%, 17%, 18%, 19%, 20%, 21%, 22%, 23%, 24%, 25%, 26%, 27%, 28%, 29%, 30%, 35%, 40%, 45%, 50% or a range constituted by any of the above values. Optionally, the mass content percentage of the first negative electrode active material is 5%-45%, 5%-40%, 5%-35%, 5%-30%, 5%-29%, 5%- 28%, 5%-27%, 5%-26%, 5%-25%, 5%-24%, 5%-23%, 5%-22%, 5%-21%, 5%-20%, 5%-19%, 5%-18%, 5%-17%, 5%-16%, 5%-15%, 5%-14%, 5%-13%, 5%-12%, 5%-11%, or 5%-10%. When the mass content percentage of the first negative electrode active material is within a suitable range, the secondary battery can be ensured to have a high energy density as well as significantly improved cycling performance and storage performance.

In some embodiments, the positive electrode active material further comprises a second positive electrode active material. The second positive electrode active material is selected from materials capable of de-intercalating and intercalating active ions (e.g., lithium ions, sodium ions, potassium ions, zinc ions, calcium ions, or barium ions, etc.). In the present application, the type of the second positive electrode active material is not particularly limited, and a positive electrode active material for secondary batteries well known in the art can be used, for example, a positive electrode active material for lithium ion batteries, sodium ion batteries, potassium ion batteries, zinc ion batteries, calcium ion batteries or barium ion batteries can be used. As an example, the second positive electrode active material includes, but is not limited to, one or more of lithium transition metal oxides, lithium-containing phosphates, sodium transition metal oxides, potassium transition metal oxides, polyanionic materials, Prussian blue materials and respective modified compounds thereof. These second positive electrode active materials may be used alone or in combination of two or more.

An example of the lithium transition metal oxide may include, but not limited to, one or more of lithium cobalt oxides, lithium nickel oxides, lithium manganese oxides, lithium nickel cobalt oxides, lithium manganese cobalt oxides, lithium nickel manganese oxides, lithium nickel cobalt manganese oxides, lithium nickel cobalt aluminum oxides, lithium-rich manganese-based materials and modified compounds thereof. An example of the lithium-containing phosphate can include, but is not limited to, one or more of lithium iron phosphate, a lithium iron phosphate-carbon composite, lithium manganese phosphate, a lithium manganese phosphate-carbon composite, lithium iron manganese phosphate, a lithium iron manganese phosphate-carbon composite and a respective modified compound thereof.

For example, when the secondary battery of the present application is a lithium ion battery, the second positive electrode active material may include, but is not limited to, one of more LiCoO₂, LiNiO₂, LiMnO₂, LiMn₂O₄, LiNi_{1/3}Co_{1/3}Mn_{1/3}O₂, LiNi_{0.5}Co_{0.2}Mn_{0.3}O₂, LiNi_{0.6}Co_{0.2}Mn_{0.2}O₂, LiNi_{0.8}Co_{0.1}Mn_{0.1}O₂, LiNi_{0.85}Co_{0.15}Al_{0.05}O₂, mLi₂MnO₃•(1-m)LiMnO₂ (0 < m < 1), LiFePO₄ and LiMnPO₄. When the secondary battery of the present application is a sodium ion battery, the second positive electrode active material may include, but is not limited to, one or more of NaFeO₂, NaCoO₂, NaCrO₂, NaMnO₂, NaNiO₂, NaNi_{1/2}Ti_{1/2}O₂, NaNi_{1/2}Mn_{1/2}O₂, Na_{2/3}Fe_{1/3}Mn_{2/3}O₂, NaNi_{1/3}Co_{1/3}Mn_{1/3}O₂, NaFePO₄, NaMnPO₄, NaCoPO₄, Bₐ₁M_{b1}(PO₄)_{c1}Oₓ₁Y₃₋ₓ₁ (wherein B is selected from one or more of H⁺, Li⁺, Na⁺, K⁺ and NH₄⁺, M is a transition metal cation, preferably selected from one or more V, Ti, Mn, Fe, Co, Ni, Cu and Zn, Y is a halogen anion, preferably selected from one or more F, Cl and Br, 0 < a1 ≤ 4, 0 < b1 ≤ 2, 1 ≤ c1 ≤ 3, and 0 ≤ x1 ≤ 2).

In the present application, the modified compounds of the second positive electrode active materials described above can be obtained by the doping modification, surface coating modification, or doping and surface coating modification of the second positive electrode active materials.

In some embodiments, the mass content percentage of the second positive electrode active material is 20%-95%, based on the total mass of the positive electrode film layer. Optionally, the mass content percentage of the second positive electrode active material is 25%-95%, 30%-95%, 35%-95%, 40%-95%, 45%-95%, 50%- 95%, 55%-95%, 60%-95%, 65%-95%, 70%-95%, 75%-95%, 80%-95%, 85%-95%, or 90%-95%. When the mass content percentage of the second positive electrode active material is within a suitable range, the negative effect of the volume expansion of the silicon-based material and the tin-based material can be effectively reduced, and the cycling performance and storage performance of the secondary battery can be further improved.

In some embodiments, the molar ratio of the first positive electrode active material to the second positive electrode active material is 1 : m, with 1 ≤ m ≤ 65. Optionally, 1 ≤ m ≤ 60, 1 ≤ m ≤ 55, 1 ≤ m ≤ 50, 1 ≤ m ≤ 45, 1 ≤ m ≤ 40, 1 ≤ m ≤ 35, 1 ≤ m ≤ 30, 1 ≤ m ≤ 25, 1 ≤ m ≤ 20, 1 ≤ m ≤ 15, 2 ≤ m ≤ 65, 2 ≤ m ≤ 60, 2 ≤ m ≤ 55, 2 ≤ m ≤ 50, 2 ≤ m ≤ 45, 2 ≤ m ≤ 40, 2 ≤ m ≤ 35, 2 ≤ m ≤ 30, 2 ≤ m ≤ 25, 2 ≤ m ≤ 20, 2 ≤ m ≤ 15, 3 ≤ m ≤ 65, 3 ≤ m ≤ 60, 3 ≤ m ≤ 55, 3 ≤ m ≤ 50, 3 ≤ m ≤ 45, 3 ≤ m ≤ 40, 3 ≤ m ≤ 35, 3 ≤ m ≤ 30, 3 ≤ m ≤ 25, 3 ≤ m ≤ 20, or 3 ≤ m ≤ 15. When the molar ratio of the first positive electrode active material to the second positive electrode active material is within a suitable range, the cycling performance and storage performance of the secondary battery can be further improved.

In some embodiments, the positive electrode film layer may also optionally comprise a positive electrode conductive agent. In the present application, the type of the positive electrode conductive agent is not particularly limited. As an example, the positive electrode conductive agent includes one or more of superconducting carbon, conductive graphite, acetylene black, carbon black, Ketjen black, carbon dots, carbon nanotubes, graphene and carbon nanofibers. In some embodiments, the mass content percentage of the positive electrode conductive agent is ≤ 5%, based on the total mass of the positive electrode film layer. Optionally, the mass content percentage of the positive electrode conductive agent is 0.5%-5%, 0.5%-4%, 0.5%-3%, 0.5%-2%, or 0.5%-1%.

In some embodiments, the positive electrode film layer may also optionally comprise a positive electrode binder. In the present application, the type of the positive electrode binder is not particularly limited. As an example, the positive electrode binder may include one or more of polyvinylidene fluoride (PVDF), polytetrafluoroethylene (PTFE), a vinylidene fluoride-tetrafluoroethylene-propylene terpolymer, a vinylidene fluoride-hexafluoropropylene-tetrafluoroethylene terpolymer, a tetrafluoroethylene-hexafluoropropylene copolymer and a fluorinated acrylate resin. In some embodiments, the mass content percentage of the positive electrode binder is ≤ 5%, based on the total mass of the positive electrode film layer. Optionally, the mass content percentage of the positive electrode binder is 0.5%-5%, 0.5%-4%, 0.5%-3%, 0.5%-2%, or 0.5%-1%.

The positive electrode film layer is usually formed by coating a positive electrode slurry on a positive electrode current collector, and drying and cold pressing same. The positive electrode slurry is usually formed by dispersing the positive electrode active material, an optional conductive agent, an optional binder and any other components in a solvent and uniformly stirring same. The solvent may be N-methylpyrrolidone (NMP), but is not limited thereto.

In some embodiments, the positive electrode film layer comprises a first positive electrode active material, a second positive electrode active material, a positive electrode conductive agent and a positive electrode binder at the same time.

The positive electrode current collector has two opposite surfaces in the thickness direction thereof, and the positive electrode film layer is provided on either or both of the two opposite surfaces of the positive electrode current collector. In some embodiments, the positive electrode current collector can be a metal foil or a composite current collector. As an example of the metal foil, an aluminum foil can be used. The composite current collector may comprise a polymer material substrate and a metal material layer formed on at least one surface of the polymer material substrate. As an example, the metal material may be selected from one or more of aluminum, an aluminum alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE) etc.

In some embodiments, the silicon-based material comprises one or more of elemental silicon, silicon oxides, silicon carbon composites, silicon nitrogen composites and silicon alloy materials. Optionally, the silicon-based material comprises one or more of silicon oxides, silicon carbon composites, silicon nitrogen composites and silicon alloy materials. Further, the silicon-based material comprises one or more of silicon oxides and silicon nitrogen composites.

Compared with elemental silicon, the volume expansion of silicon oxides and silicon nitrogen composites is smaller, and due to the presence of oxygen atoms and nitrogen atoms, the silicon oxide and the silicon nitrogen composite can also be reacted with M1 ions to form electrochemically inactive porous materials of M1-O, M1-N, M1-Si-O, M1-Si-N, etc., (e.g., MgO, Mg₂SiO₄, Mg₂SiO₃, etc.), which are coated on the surface of the negative electrode active material to form the negative electrode active material with a core-shell structure. These porous materials hardly participate in the reaction during the subsequent cycle, but can function in buffering the volume expansion, inhibiting the pulverization of the negative electrode active material, stabilizing the SEI film on the surface of the negative electrode active material and reducing the continuous irreversible consumption of the active ions, such that the cycling performance and storage performance of the secondary battery are improved. In addition, the negative electrode active material with a core-shell structure also provides more expandable space for the M1 ions and the active ions when they are combined with a silicon oxide and a silicon nitrogen composite to form an alloyed product. Therefore, the secondary battery can have significantly improved cycling performance and storage performance.

In some embodiments, the tin-based material comprises one or more of elemental tin, tin oxides, tin carbon composites, and tin alloy materials. Optionally, the tin-based material comprises one or more of tin oxides, tin carbon composites and tin alloy materials. Further, the tin-based material comprises one or more tin oxides.

Compared with elemental tin, the volume expansion of a tin oxide is smaller, and due to the presence of oxygen atoms, the tin oxide can also be reacted with the M1 ions to form electrochemically inactive porous materials of M1-O, M1-Sn-O, etc., which are coated on the surface of the negative electrode active material to form the negative electrode active material with a core-shell structure. These porous materials hardly participate in the reaction during the subsequent cycle, but can function in buffering the volume expansion, inhibiting the pulverization of the negative electrode active material, stabilizing the SEI film on the surface of the negative electrode active material and reducing the continuous irreversible consumption of the active ions, such that the cycling performance and storage performance of the secondary battery are improved. In addition, the negative electrode active material with a core-shell structure also provides more expandable space for the M1 ions and the active ions when they are combined with a tin oxide to form an alloyed product. Therefore, the secondary battery can have significantly improved cycling performance and storage performance.

In the present application, the negative electrode active material may comprise other negative electrode active materials in addition to the silicon-based materials and tin-based materials. In some embodiments, the negative electrode active material further comprises a second negative electrode active material. The second negative electrode active material is selected from materials capable of de-intercalating and intercalating an active ion (e.g., a lithium ion, a sodium ion, a potassium ion, a zinc ion, a calcium ion, or a barium ion, etc.). In the present application, the type of the second negative electrode active material is not particularly limited, and negative electrode active materials well known in the art for secondary batteries can be used. For example, negative active materials for lithium ion batteries, sodium ion batteries, potassium ion batteries, zinc ion batteries, calcium ion batteries or barium ion batteries can be used. As an example, the second negative electrode active material includes, but is not limited to, one or more of natural graphite, synthetic graphite, soft carbon, hard carbon and lithium titanate. These second negative electrode active materials may be used alone or in combination of two or more.

In some embodiments, the mass content percentage of the second negative electrode active material is 40% to 90%, based on the total mass of the negative electrode film layer. For example, the mass content percentage of the second negative electrode active material is 40%, 45%, 50%, 55%, 60%, 65%, 70%, 75%, 80%, 85%, 90% or a range constituted by any of the above values. Optionally, the mass content percentage of the second negative electrode active material is 45%-90%, 50%-90%, 55%-90%, 60%-90%, 62.5%-90%, 65%- 90%, 67.5%-90%, 70%-90%, 72.5%-90%, 75%-90%, 77.5%-90%, 80%-90%, 82.5%-90%, or 85%-90%. When the mass content percentage of the second negative electrode active material is within a suitable range, the secondary battery can be ensured to have a high energy density as well as significantly improved cycling performance and storage performance.

In some embodiments, the negative electrode film layer may also optionally comprise a negative electrode conductive agent. In the present application, the type of the negative electrode conductive agent is not particularly limited. As an example, the negative electrode conductive agent can include one or more of superconducting carbon, conductive graphite, acetylene black, carbon black, Ketjen black, carbon dots, carbon nanotubes, graphene and carbon nanofibers. In some embodiments, the mass content percentage of the negative electrode conductive agent is ≤ 5%, based on the total mass of the negative electrode film layer. Optionally, the mass content percentage of the negative electrode conductive agent is 0.5%-5%, 0.5%-4%, 0.5%-3%, 0.5%-2%, or 0.5%-1%.

In some embodiments, the negative electrode film layer may also optionally comprise a negative electrode binder. In the present application, the type of the negative electrode binder is not particularly limited. As an example, the negative electrode binder may include one or more of a styrene-butadiene rubber (SBR), a water-soluble unsaturated resin of SR-1B, a water-based acrylic resin (for example, polyacrylic acid PAA, polymethacrylic acid PMAA, and sodium polyacrylate PAAS), polyacrylamide (PAM), polyvinyl alcohol (PVA), sodium alginate (SA), and carboxymethyl chitosan (CMCS). In some embodiments, the mass content percentage of the negative electrode binder is ≤ 5%, based on the total mass of the negative electrode film layer. Optionally, the mass content percentage of the negative electrode binder is 0.5%-5%, 0.5%-4%, 0.5%-3%, 0.5%-2%, or 0.5%-1%.

In some embodiments, the negative electrode film layer may also optionally comprise other auxiliary agents. As an example, the other auxiliary agents may be a thickening agent, for example, sodium carboxymethyl cellulose (CMC-Na), a PTC thermistor material, etc. In some embodiments, the mass content percentages of the other auxiliary agents are ≤ 2%, based on the total mass of the negative electrode film layer. Optionally, the mass content percentages of the other auxiliary agents are 0.1%-2%, 0.1%-1.5%, 0.1%-1%, or 0.1%-0.5%.

The negative electrode film layer is usually formed by coating a negative electrode slurry on a negative electrode current collector, and drying and cold pressing same. The negative electrode slurry is generally formed by dispersing a negative electrode active material, an optional conductive agent, an optional binder and optional other auxiliary agents, into a solvent and uniformly stirring same. The solvent may be N-methylpyrrolidone (NMP) or deionized water, but is not limited thereto.

In some embodiments, the negative electrode film layer comprises a first negative electrode active material, a negative electrode conductive agent, a negative electrode binder, and a thickening agent.

In some embodiments, the negative electrode film layer comprises a first negative electrode active material, a second negative electrode active material, a negative electrode conductive agent, a negative electrode binder, and a thickening agent.

The negative electrode current collector has two opposite surfaces in the thickness direction thereof, and the negative electrode film layer is provided on either or both of the two opposite surfaces of the negative electrode current collector. In some embodiments, the negative electrode current collector can be a metal foil or a composite current collector. As an example of the metal foil, a copper foil can be used. The composite current collector may comprise a polymer material substrate and a metal material layer formed on at least one surface of the polymer material substrate. As an example, the metal material may be selected from one or more of copper, a copper alloy, nickel, a nickel alloy, titanium, a titanium alloy, silver, and a silver alloy. As an example, the polymer material substrate may be selected from polypropylene (PP), polyethylene terephthalate (PET), polybutylene terephthalate (PBT), polystyrene (PS), polyethylene (PE) etc.

In the present application, the negative electrode plate may comprise other additional functional layers in addition to the negative electrode film layer. For example, in some embodiments, the negative electrode plate of the present application can also comprise a conductive primer (e.g., composed of a conductive agent and a binder) provided between the negative electrode current collector and the negative electrode film layer and disposed on the surface of the negative electrode current collector. In some other embodiments, the negative electrode plate of the present application can also comprise a protective layer covering the surface of the negative electrode film layer.

The secondary battery in the present application can also comprise an electrolyte, which is provided between the positive electrode plate and the negative electrode plate and functions for active ion conduction. The type of the electrolyte is not specifically limited in the present application, and can be selected according to actual requirements. For example, the electrolyte may be selected from at least one of solid electrolyte and liquid electrolyte (i.e., electrolyte solution).

In some embodiments, the electrolyte may be an electrolyte solution. The electrolyte comprises an electrolyte salt and a solvent.

The type of the electrolyte salt is not specifically limited, and can be selected according to actual requirements. In some embodiments, the electrolyte salt includes, but are not limited to, one or more of lithium salts and sodium salts. Optionally, the lithium salts comprise one or more of lithium hexafluorophosphate (LiPF₆), lithium tetrafluoroborate (LiBF₄), lithium perchlorate (LiClO₄), lithium hexafluoroarsenate (LiAsF₆), lithium bisfluorosulfonimide (LiFSI), lithium bistrifluoromethanesulfonimide (LiTFSI), lithium trifluoromethanesulfonate (LiTFS), lithium difluorooxalate borate (LiDFOB), lithium dioxalate borate (LiBOB), lithium difluorophosphate (LiPO₂F₂), lithium bisoxalatodifluorophosphate (LiDFOP) and lithium tetrafluorooxalate phosphate (LiTFOP). Optionally, the sodium salts comprise one or more of NaPF₆, NaClO₄, NaBCl₄, NaSO₃CF₃ and Na(CH₃)C₆H₄SO₃.

The type of the solvent is not specifically limited, and can be selected according to actual requirements. In some embodiments, as an example, the solvent may comprise one or more of ethylene carbonate (EC), propylene carbonate (PC), ethyl methyl carbonate (EMC), diethyl carbonate (DEC), dimethyl carbonate (DMC), dipropyl carbonate (DPC), methyl propyl carbonate (MPC), ethyl propyl carbonate (EPC), butylene carbonate (BC), fluoroethylene carbonate (FEC), methyl formate (MF), methyl acetate (MA), ethyl acetate (EA), propyl acetate (PA), methyl propionate (MP), ethyl propionate (EP), propyl propionate (PP), methyl butyrate (MB), ethyl butyrate (EB), 1,4-butyrolactone (GBL), sulfolane (SF), dimethyl sulfone (MSM), ethyl methyl sulfone (EMS) and diethyl sulfone (ESE).

In some embodiments, the electrolyte solution may also optionally comprise additives. For example, the additives may comprise negative electrode film-forming additives, positive electrode film-forming additives, and additives that can improve certain performance of the battery, such as additives that improve overcharge performance of the battery, additives that improve high-temperature performance of the battery, and those that improve low-temperature power performance of the battery.

The secondary battery using an electrolyte solution and some secondary batteries using a solid electrolyte further comprise a separator. The separator is provided between the positive electrode plate and the negative electrode plate, and functions for separation. The type of the separator is not particularly limited in the present application, and any well known porous-structure separator with good chemical stability and mechanical stability may be selected. In some embodiments, the material of the separator may be selected from one or more of glass fibers, a non-woven, polyethylene, polypropylene and polyvinylidene fluoride. The separator may be a single-layer film, or a multi-layer composite film. When the separator is a multi-layer composite film, the materials of the respective layers are the same or different.

In some embodiments, the positive electrode plate, the separator and the negative electrode plate can form an electrode assembly by a winding process or a stacking process.

In some embodiments, the secondary battery can comprises an outer package. The outer package can be used to encapsulate the above-mentioned electrode assembly and electrolyte.

In some embodiments, the outer package of the secondary battery can be a hard shell, for example, a hard plastic shell, an aluminum shell, a steel shell, etc. The outer package of the secondary battery may also be a soft bag, such as a pouch-type soft bag. The material of the soft bag may plastics, such as one or more of polypropylene (PP), polybutylene terephthalate (PBT), polybutylene succinate (PBS), etc.

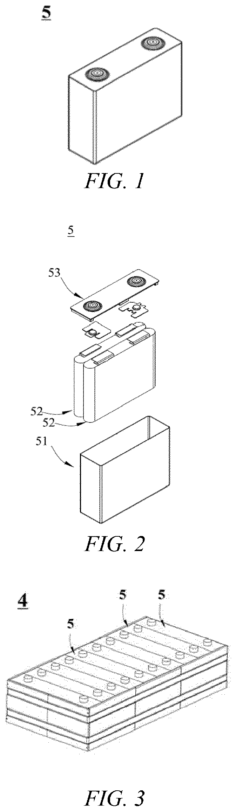

The shape of the secondary battery is not particularly limited in the present application, and may be cylindrical, square or of any other shape. Fig. 1 shows a square secondary battery 5 as an example.

In some embodiments, as shown in Fig. 2, the outer package may comprise a housing 51 and a cover plate 53. Herein, the housing 51 may comprise a bottom plate and side plates connected to the bottom plate, and the bottom plate and the side plates enclose to form an accommodating cavity. The housing 51 has an opening in communication with the accommodating cavity, and the cover plate 53 is used for covering the opening to close the accommodating cavity. The positive electrode plate, the negative electrode plate and the separator can form an electrode assembly 52 by a winding process or a stacking process. The electrode assembly 52 is packaged in the accommodating cavity. The electrolyte solution infiltrates the electrode assembly 52. The number of the electrode assemblies 52 contained in the secondary battery 5 may be one or more, and may be adjusted according to requirements.

The method for preparing the secondary battery of the present application are well-known. In some embodiments, the positive electrode plate, the separator and the negative electrode plate can be made into an electrode assembly by a winding process or a stacking process, which is placed in an outer package, dried, then injected with an electrolyte solution, subjected to procedures of vacuum packaging, leaving to stand, forming, shaping, etc., to obtain a secondary battery.

### Battery module and battery pack

In some embodiments of the present application, the secondary battery according to the present application can be assembled into a battery module, and the number of the secondary batteries contained in the battery module can be multiple, and the specific number can be adjusted according to the application and capacity of the battery module.

Fig. 3 shows a schematic diagram of a battery module 4 as an example. As shown in Fig.3, in the battery module 4, a plurality of secondary batteries 5 can be arranged in sequence along the length direction of the battery module 4. Apparently, the secondary batteries may also be arranged in any other manner. Furthermore, the plurality of secondary batteries 5 may be fixed by fasteners.

Optionally, the battery module 4 may also comprise a housing with an accommodating space, and a plurality of secondary batteries 5 are accommodated in the accommodating space.

In some embodiments, the above battery module can also be assembled into a battery pack, and the number of the battery modules contained in the battery pack can be adjusted according to the application and capacity of the battery pack.

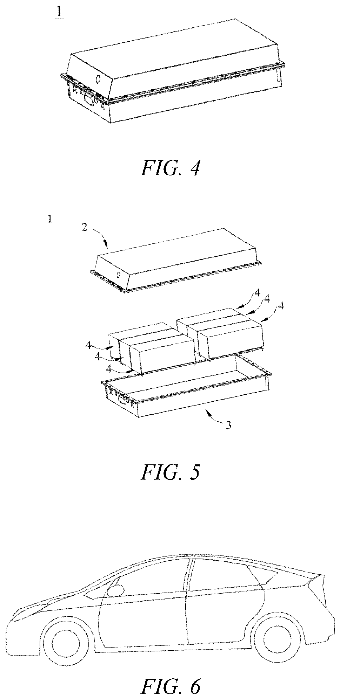

Fig. 4 and Fig. 5 show a schematic diagram of a battery module 1 as an example. As shown in Fig. 4 and Fig. 5, the battery pack 1 can include a battery box and a plurality of battery modules 4 arranged in the battery box. The battery case includes an upper case body 2 and a lower case body 3, and the upper case body 2 is used to cover the lower case body 3 to form a closed space for accommodating the battery modules 4. A plurality of battery modules 4 may be arranged in the battery box in any manner.

### Power consuming device

The embodiments of the present application further provide a power consuming device comprising at least one of the secondary battery, battery module, or battery pack of the present application. The secondary battery, battery module or battery pack may be used as a power supply of the power consuming device or as an energy storage unit of the power consuming device. The power consuming device may be, but is not limited to, a mobile device (e.g., a mobile phone, a laptop computer, etc.), an electric vehicle (e.g., a pure electric vehicle, a hybrid electric vehicle, a plug-in hybrid electric vehicle, an electric bicycle, an electric scooter, an electric golf cart, an electric truck, etc.), an electric train, ship and satellite, an energy storage system, etc.

The power consuming device may incorporate the secondary battery, battery module or battery pack according to its usage requirements.

Fig. 6 shows a schematic diagram of a power consuming device as an example. The power consuming device may be a pure electric vehicle, a hybrid electric vehicle, a plug-in hybrid electric vehicle or the like. In order to meet the requirements of the power consuming device for a high power and a high energy density, a battery pack or a battery module may be used.

As another example, the power consuming device may be a mobile phone, a tablet, a laptop computer, etc. The power consuming device is generally required to be thin and light, and may use a secondary battery as a power source.

### Examples

The following examples more specifically describe the content disclosed in the present application, and these examples are only used for explanatory description, because various modifications and changes within the scope of the present disclosure are obvious to those skilled in the art. Unless otherwise noted, all parts, percentages and ratios reported in the following examples are on a weight basis, and all reagents used in the examples are commercially available or are synthesized according to conventional methods, and can be used directly without further treatment, and the instruments used in the examples are commercially available.

### Example 1

### Preparation of first positive electrode active material

Potassium permanganate and tetraethylammonium bromide are mixed at an equal molar ratio, filtered and dried at room temperature to obtain a precursor; the precursor is added into a reducing solvent which is mixed with water and sec-butanol at an equal volume ratio for reduction to obtain a sol; the sol is aged at 80°C for 48 h to obtain a gel; the gel is ion-exchanged with an aqueous magnesium chloride solution at an equal molar ratio, vigorously stirred for 8 hours, and then transferred to a reaction kettle and hydrothermally reacted at 180°C for 6 hours to obtain a precipitate; the precipitate is filtered, washed and dried to obtain Mg₂Mn₂O₄, wherein Mg₂Mn₂O₄ has a volume-average particle size Dv50 of 14 µm and a specific surface area of 0.4 m²/g.

### Preparation of positive electrode plate

The above-mentioned first positive electrode active material of Mg₂Mn₂O₄, a second positive electrode active material of LiFePO₄, a conductive agent of carbon black (Super P), and a binder of polyvinylidene fluoride (PVDF) are fully stirred and mixed at a mass ratio of 70.8 : 25.2 : 2 : 2 in an appropriate amount of a solvent of NMP to form a uniform positive electrode slurry, wherein the viscosity of the positive electrode slurry is controlled at 100 Pa.s-20000 mPa.s; the positive electrode slurry is uniformly coated onto a surface of a positive electrode current collector of aluminum foil, followed by drying and cold pressing, to obtain a positive electrode plate.

### Preparation of negative electrode plate

A first negative electrode active material of a silicon oxide, a second negative electrode active material of graphite, a conductive agent of carbon black (Super P), a binder of a butadiene styrene rubber (SBR) and a thickening agent of sodium carboxymethyl cellulose (CMC-Na) are fully stirred and mixed at a mass ratio of 14.5 : 82.0 : 1.0 : 1.5 : 1.0 in an appropriate amount of a solvent of deionized water to form a uniform negative electrode slurry; the negative electrode slurry is uniformly coated onto a surface of a negative electrode current collector of a copper foil, followed by drying and cold pressing, to obtain a negative electrode plate, wherein the mass ratio of the first positive electrode active material of Mg₂Mn₂O₄ to the first negative electrode active material of the silicon oxide is 0.55 : 1.

### Preparation of electrolyte solution

Ethylene carbonate (EC), propylene carbonate (PC) and diethyl carbonate (DEC) are mixed at a mass ratio of 30 : 30 : 40 to obtain an organic solvent, and then the fully dried LiPF₆ is dissolved in the organic solvent to prepare an electrolyte with a concentration of 1 mol/L.

### Preparation of separator

A porous polypropylene film with a thickness of 12 µm is used as a separator.

### Preparation of secondary battery

The positive electrode plate, the separator and the negative electrode plate are stacked and wound in sequence to obtain an electrode assembly with a thickness of 8 mm, a width of 60 mm and a length of 130 mm; the electrode assembly is placed in an outer package, baked in vacuum at 75°C for 10 h, then injected with an electrolyte solution, and subjected to procedures such as vacuum packaging, leaving to stand, forming, etc., to obtain a secondary battery.

### Examples 2-40 and Comparative examples 1-3

The method for preparing the secondary battery is similar to that of Example 1, except that parameters such as the types of the first positive electrode active material and the second positive electrode active material, the mass content percentages of the first positive electrode active material and the second positive electrode active material, and the mass ratio of the first positive electrode active material to the first negative electrode active material, see Table 1 and Table 2 for specific parameters. Among them, by adjusting parameters such as the type and mass of the first negative electrode active material, the type and mass of the second negative electrode active material, and the total mass of the negative electrode plate in the various embodiments, the mass ratio of the first positive electrode active material to the first negative electrode active material in the various embodiments can be obtained, and the ratio of the total capacity of the negative electrode plate to the total capacity of the positive electrode plate (i.e., the N/P ratio) the various embodiments can be controlled to be 1.07-1.20. The total capacity of the negative electrode plate = the total mass of the first negative electrode active material in the negative electrode plate × the reversible capacity per gram of the first negative electrode active material + the total mass of the second negative electrode active material in the negative electrode plate × the reversible capacity per gram of the second negative electrode active material, and the total capacity of the positive electrode plate = the total mass of the first positive electrode active material in the positive electrode plate × the reversible capacity per gram of the first positive electrode active material + the total mass of the second positive electrode active material in the positive electrode plate × the reversible capacity per gram of the second positive electrode active material.

The method for preparing the first positive electrode active material used in Examples 19 to 26 is similar to that of Example 1, except that: in the preparation method of Example 19, the hydrothermal reaction temperature is 180°C and the hydrothermal reaction time is 4 h; in the preparation method of Example 20, the hydrothermal reaction temperature is 180°C and the hydrothermal reaction time is 12 h; in the preparation method of Example 21, the hydrothermal reaction temperature is 180°C and the hydrothermal reaction time is 3 h; in the preparation method of Example 22, the hydrothermal reaction temperature is 180°C and the hydrothermal reaction time is 14 h; in the preparation method of Example 23, the hydrothermal reaction temperature is 200°C and the hydrothermal reaction time is 6 h; in the preparation method of Example 24, the hydrothermal reaction temperature is 150°C and the hydrothermal reaction time is 6 h; in the preparation method of Example 25, the hydrothermal reaction temperature is 210°C and the hydrothermal reaction time is 6 h; in the preparation method of Example 26, the hydrothermal reaction temperature is 120°C and the hydrothermal reaction time is 6 h.

The method for preparing the first positive electrode active material used in Examples 27 to 29 comprises the steps of mixing potassium permanganate and tetraethylammonium bromide at an equal molar ratio, and filtering and drying same at room temperature to obtain a precursor; adding the precursor into a reducing solvent which is mixed with water and sec-butanol at equal volume ratio for reduction to obtain a sol; aging the sol at 80°C for 48 h to obtain a gel; ion-exchanging the gel with an aqueous aluminium chloride solution at an equal molar ratio, vigorously stirring same for 8 h, and then transferring same to a reaction kettle for a hydrothermal reaction at 180°C for 6 hours to obtain a precipitate; and filtering, washing and drying the precipitate to obtain Al₂Mn₂O₅.

The method for preparing the first positive electrode active material used in Example 39 comprises the steps of mixing potassium permanganate and tetraethylammonium bromide at an equal molar ratio, and filtering and drying same at room temperature to obtain a precursor; adding the precursor into a reducing solvent which is mixed with water and sec-butanol at an equal volume ratio for reduction to obtain a sol; uniformly mixing the sol with an aqueous nickel acetate solution at a stoichiometric ratio (the molar ratio of Mn to Ni is 1.5 : 0.5), and aging the mixture at 80°C for 48 h to obtain a gel; ion-exchanging the gel with an aqueous magnesium chloride solution at an equal molar ratio, vigorously stirring same for 8 h, then transferring same to a reaction kettle for a hydrothermal reaction at 180°C for 6 hours to obtain a precipitate; and filtering, washing and drying the precipitate to obtain Mg₂Mn_{1.5}Ni_{0.5}O₄.

The method for preparing the first positive electrode active material used in Example 40 comprises the steps of mixing potassium permanganate and tetraethylammonium bromide at an equal molar ratio, and filtering and drying same at room temperature to obtain a precursor; adding the precursor into a reducing solvent which is mixed with water and sec-butanol at an equal volume ratio for reduction to obtain a sol; uniformly mixing the sol with an aqueous nickel acetate solution at a stoichiometric ratio, and aging the mixture at 80°C for 48 h to obtain a gel; ion-exchanging the gel with an aqueous magnesium chloride solution at an equal molar ratio, vigorously stirring same for 8 h, then transferring same to a reaction kettle for a hydrothermal reaction at 180°C for 6 hours to obtain a precipitate; and filtering the precipitate, then hydrothermally reacting same with sodium sulfide at a stoichiometric ratio (the molar ratio of Mn to S is 1.5 : 0.8) at 100°C for 6 h, followed by filtration, washing and drying, to obtain Mg₂Mn_{1.5}Ni_{0.5}O_{3.2}S_{0.8}.

**Table 1**

| No. | First positive electrode active material | | | Second positive electrode active material |
|---|---|---|---|---|
| | Molecular formula | Dv50 (µm) | Specific surface area (m²/g) | |
| Example 1 | Mg₂Mn₂O₄ | 14 | 0.4 | LiFePO₄ |
| Example 2 | Mg₂Mn₂O₄ | 14 | 0.4 | LiFePO₄ |
| Example 3 | Mg₂Mn₂O₄ | 14 | 0.4 | LiFePO₄ |
| Example 4 | Mg₂Mn₂O₄ | 14 | 0.4 | LiFePO₄ |
| Example 5 | Mg₂Mn₂O₄ | 14 | 0.4 | LiFePO₄ |
| Example 6 | Mg₂Mn₂O₄ | 14 | 0.4 | LiFePO₄ |
| Example 7 | Mg₂Mn₂O₄ | 14 | 0.4 | LiFePO₄ |
| Example 8 | Mg₂Mn₂O₄ | 14 | 0.4 | LiFePO₄ |
| Example 9 | Mg₂Mn₂O₄ | 14 | 0.4 | LiFePO₄ |
| Example 10 | Mg₂Mn₂O₄ | 14 | 0.4 | LiFePO₄ |
| Example 11 | Mg₂Mn₂O₄ | 14 | 0.4 | LiFePO₄ |
| Example 12 | Mg₂Mn₂O₄ | 14 | 0.4 | LiFePO₄ |
| Example 13 | Mg₂Mn₂O₄ | 14 | 0.4 | LiFePO₄ |
| Example 14 | Mg₂Mn₂O₄ | 14 | 0.4 | LiFePO₄ |
| Example 15 | Mg₂Mn₂O₄ | 14 | 0.4 | LiFePO₄ |
| Example 16 | Mg₂Mn₂O₄ | 14 | 0.4 | LiFePO₄ |
| Example 17 | Mg₂Mn₂O₄ | 14 | 0.4 | LiFePO₄ |
| Example 18 | Mg₂Mn₂O₄ | 14 | 0.4 | LiFePO₄ |
| Example 19 | Mg₂Mn₂O₄ | 8 | 0.4 | LiFePO₄ |
| Example 20 | Mg₂Mn₂O₄ | 20 | 0.4 | LiFePO₄ |
| Example 21 | Mg₂Mn₂O₄ | 6.5 | 0.4 | LiFePO₄ |
| Example 22 | Mg₂Mn₂O₄ | 22 | 0.4 | LiFePO₄ |
| Example 23 | Mg₂Mn₂O₄ | 14 | 0.2 | LiFePO₄ |
| Example 24 | Mg₂Mn₂O₄ | 14 | 0.9 | LiFePO₄ |
| Example 25 | Mg₂Mn₂O₄ | 14 | 0.1 | LiFePO₄ |
| Example 26 | Mg₂Mn₂O₄ | 14 | 1.1 | LiFePO₄ |
| Example 27 | Al₂Mn₂O₅ | 14 | 0.4 | LiFePO₄ |
| Example 28 | Al₂Mn₂O₅ | 14 | 0.4 | LiFePO₄ |
| Example 29 | Al₂Mn₂O₅ | 14 | 0.4 | LiFePO₄ |
| Example 30 | Mg₂Mn₂O₄ | 14 | 0.4 | LiNi_{0.5}Co_{0.2}Mn_{0.3}O₂ |
| Example 31 | Mg₂Mn₂O₄ | 14 | 0.4 | LiNi_{0.5}Co_{0.2}Mn_{0.3}O₂ |
| Example 32 | Mg₂Mn₂O₄ | 14 | 0.4 | LiNi_{0.5}Co_{0.2}Mn_{0.3}O₂ |
| Example 33 | Mg₂Mn₂O₄ | 14 | 0.4 | LiNi_{0.5}Co_{0.2}Mn_{0.3}O₂ |
| Example 34 | Mg₂Mn₂O₄ | 14 | 0.4 | LiNi_{0.5}Co_{0.2}Mn_{0.3}O₂ |
| Example 35 | Mg₂Mn₂O₄ | 14 | 0.4 | 0.5Li₂MnO₃·0.5LiMnO₂ |
| Example 36 | Mg₂Mn₂O₄ | 14 | 0.4 | 0.5Li₂MnO₃·0.5LiMnO₂ |
| Example 37 | Mg₂Mn₂O₄ | 14 | 0.4 | 0.5Li₂MnO₃·0.5LiMnO₂ |
| Example 38 | Mg₂Mn₂O₄ | 14 | 0.4 | 0.5Li₂MnO₃·0.5LiMnO₂ |
| Example 39 | Mg₂Mn_{1.5}Ni_{0.5}O₄ | 14 | 0.4 | LiFePO₄ |
| Example 40 | Mg₂Mn_{1.5}Ni_{0.5}O_{3.2}S_{0.8} | 14 | 0.4 | LiFePO₄ |
| Comparative example 1 | / | / | / | LiFePO₄ |
| Comparative example 2 | / | / | / | LiNi_{0.5}Co_{0.2}Mn_{0.3}O₂ |
| Comparative example 3 | / | / | / | 0.5Li₂MnO_{3•}0.5LiMnO₂ |

**Table 2**

| No. | Mass ratio of first positive electrode active material to first negative electrode active material | Composition of positive electrode film layer | |
|---|---|---|---|
| | | Mass content percentage of first positive electrode active material | Mass content percentage of second positive electrode active material |
| Example 1 | 0.55 : 1 | 70.8% | 25.2% |
| Example 2 | 0.55 : 1 | 70.0% | 26.0% |
| Example 3 | 0.55 : 1 | 60.0% | 36.0% |
| Example 4 | 0.55 : 1 | 55.1% | 40.9% |
| Example 5 | 0.55 : 1 | 30.6% | 65.4% |
| Example 6 | 0.55 : 1 | 21.1% | 74.9% |
| Example 7 | 0.55 : 1 | 11.8% | 84.2% |
| Example 8 | 0.55 : 1 | 6.3% | 89.7% |
| Example 9 | 0.55 : 1 | 4.3% | 91.7% |
| Example 10 | 0.55 : 1 | 3.3% | 92.7% |
| Example 11 | 0.55 : 1 | 2.6% | 93.4% |
| Example 12 | 0.55 : 1 | 2.4% | 93.6% |
| Example 13 | 0.55 : 1 | 2.0% | 94.0% |
| Example 14 | 0.55 : 1 | 1.9% | 94.1% |
| Example 15 | 0.3 : 1 | 6.3% | 89.7% |
| Example 16 | 0.48 : 1 | 11.8% | 84.2% |
| Example 17 | 0.7 : 1 | 11.8% | 84.2% |
| Example 18 | 0.85 : 1 | 30.6% | 65.4% |
| Example 19 | 0.55 : 1 | 11.8% | 84.2% |
| Example 20 | 0.55 : 1 | 11.8% | 84.2% |
| Example 21 | 0.55 : 1 | 11.8% | 84.2% |
| Example 22 | 0.55 : 1 | 11.8% | 84.2% |
| Example 23 | 0.55 : 1 | 11.8% | 84.2% |
| Example 24 | 0.55 : 1 | 11.8% | 84.2% |
| Example 25 | 0.55 : 1 | 11.8% | 84.2% |
| Example 26 | 0.55 : 1 | 11.8% | 84.2% |
| Example 27 | 0.55 : 1 | 32.6% | 63.4% |
| Example 28 | 0.55 : 1 | 12.8% | 83.2% |
| Example 29 | 0.55 : 1 | 2.9% | 93.1% |
| Example 30 | 0.55 : 1 | 65.0% | 31.0% |
| Example 31 | 0.55 : 1 | 39.6% | 56.4% |
| Example 32 | 0.55 : 1 | 16.7% | 79.3% |
| Example 33 | 0.55 : 1 | 11.8% | 84.2% |
| Example 34 | 0.55 : 1 | 3.9% | 92.1% |
| Example 35 | 0.55 : 1 | 67.0% | 29.0% |
| Example 36 | 0.55 : 1 | 41.6% | 54.4% |
| Example 37 | 0.55 : 1 | 17.9% | 78.1% |
| Example 38 | 0.55 : 1 | 11.8% | 84.2% |
| Example 39 | 0.55 : 1 | 11.8% | 84.2% |
| Example 40 | 0.55 : 1 | 11.8% | 84.2% |
| Comparative example 1 | / | / | 96.0% |
| Comparative example 2 | / | / | 96.0% |
| Comparative example 3 | / | / | 96.0% |

### Test section

### (1) Test for cycling performance at 25°C

At 25°C, the secondary battery is charged at a constant current of 1 C to a charging cut-off voltage, and continue to charge at a constant voltage to a current of 0.05 C, the secondary battery is in a fully charged state at this moment, and the charge capacity at this moment is recorded, i.e., the charge capacity of the first cycle; the secondary battery is left to stand for 5 min, and then discharged at a constant current of 1 C to a discharging cut-off voltage, which is a cyclic charge/discharge process, and the discharge capacity at this moment is recorded, i.e., the discharge capacity of the first cycle. According to the above method, the secondary battery is subjected to the charge/discharge cycling test, and the discharge capacity after each cycle is recorded until the discharge capacity of the secondary battery is attenuated to 80% of the discharge capacity of the first cycle, and the cycling performance of the secondary battery is characterized by the number of cycles at this moment. The higher the number of cycles of the secondary battery, the better the cycling performance.

In Examples 1-29 and 39-40 and Comparative example 1, the charging cut-off voltage is 3.65 V and the discharging cut-off voltage is 2.8 V.

In Examples 30-38 and Comparative examples 2-3, the charging cut-off voltage is 4.35 V and the discharging cut-off voltage is 2.8 V.

### (2) Test for cycling performance at 45°C

At 45°C, the secondary battery is charged at a constant current of 1 C to a charging cut-off voltage, and continue to charge at a constant voltage to a current of 0.05 C, the secondary battery is in a fully charged state at this moment, and the charge capacity at this moment is recorded, i.e., the charge capacity of the first cycle; the secondary battery is left to stand for 5 min, and then discharged at a constant current of 1 C to a discharging cut-off voltage, which is a cyclic charge/discharge process, and the discharge capacity at this moment is recorded, i.e., the discharge capacity of the first cycle. According to the above method, the secondary battery is subjected to the charge/discharge cycling test, and the discharge capacity after each cycle is recorded until the discharge capacity of the secondary battery is attenuated to 80% of the discharge capacity of the first cycle, and the cycling performance of the secondary battery is characterized by the number of cycles at this moment. The higher the number of cycles of the secondary battery, the better the cycling performance.

In Examples 1-29 and 39-40 and Comparative example 1, the charging cut-off voltage is 3.65 V and the discharging cut-off voltage is 2.8 V.

In Examples 30-38 and Comparative examples 2-3, the charging cut-off voltage is 4.35 V and the discharging cut-off voltage is 2.8 V.

### (3) test for storage performance at 60°C

At 25°C, the secondary battery is charged at a constant current of 1 C to a charging cut-off voltage, and then continue to charge at a constant voltage to a current of 0.05 C; the secondary battery is left to stand for 5 min, and then discharged at a constant current of 1 C to a discharging cut-off voltage, and the discharge capacity at this moment is recorded, i.e. the initial discharge capacity of the secondary battery. The secondary battery is charged at a constant current of 1 C to a charging cut-off voltage, and then charged at a constant voltage until the current is 0.05 C, and the secondary battery is in a fully charged state at this moment. The secondary battery in a fully charged state is stored at 60°C, and taken out every five days and the discharge capacity of the secondary battery is tested until the discharge capacity of the secondary battery is attenuated to 80% of the initial discharge capacity. The storage performance of the secondary battery is characterized by the storage days at this moment. The higher the storage days of the secondary battery, the better the storage performance.

In Examples 1-29 and 39-40 and Comparative example 1, the charging cut-off voltage is 3.65 V and the discharging cut-off voltage is 2.8 V.

In Examples 30-38 and Comparative examples 2-3, the charging cut-off voltage is 4.35 V and the discharging cut-off voltage is 2.8 V.

Table 3 shows the performance test results of Examples 1-40 and Comparative examples 1-3.

**Table 3**

| No. | Number of cycles at 25°C | Number of cycles at 45°C | Storage days at 60°C |
|---|---|---|---|
| Example 1 | 1700 cycles | 900 cycles | 255 days |
| Example 2 | 1800 cycles | 920 cycles | 260 days |
| Example 3 | 1900 cycles | 950 cycles | 265 days |
| Example 4 | 2000 cycles | 1000 cycles | 270 days |
| Example 5 | 2500 cycles | 1500 cycles | 350 days |
| Example 6 | 2650 cycles | 1600 cycles | 370 days |
| Example 7 | 3000 cycles | 1700 cycles | 400 days |
| Example 8 | 2800 cycles | 1650 cycles | 345 days |
| Example 9 | 2700 cycles | 1600 cycles | 355 days |
| Example 10 | 2500 cycles | 1500 cycles | 355 days |
| Example 11 | 2400 cycles | 1600 cycles | 360 days |
| Example 12 | 2000 cycles | 1400 cycles | 300 days |
| Example 13 | 1850 cycles | 1400 cycles | 280 days |
| Example 14 | 1750 cycles | 1200 cycles | 270 days |
| Example 15 | 1500 cycles | 850 cycles | 250 days |
| Example 16 | 2900 cycles | 1670 cycles | 360 days |
| Example 17 | 2800 cycles | 1650 cycles | 380 days |
| Example 18 | 2100 cycles | 1000 cycles | 255 days |
| Example 19 | 2500 cycles | 1500 cycles | 355 days |
| Example 20 | 2650 cycles | 1450 cycles | 365 days |
| Example 21 | 2200 cycles | 1100 cycles | 280 days |
| Example 22 | 2100 cycles | 1300 cycles | 300 days |
| Example 23 | 2550 cycles | 1450 cycles | 330 days |
| Example 24 | 2600 cycles | 1500 cycles | 360 days |
| Example 25 | 1900 cycles | 1000 cycles | 290 days |
| Example 26 | 2250 cycles | 1100 cycles | 285 days |
| Example 27 | 2200 cycles | 1300 cycles | 320 days |
| Example 28 | 2600 cycles | 1650 cycles | 340 days |
| Example 29 | 2100 cycles | 1100 cycles | 290 days |
| Example 30 | 1200 cycles | 1000 cycles | 210 days |
| Example 31 | 1300 cycles | 1200 cycles | 200 days |
| Example 32 | 1700 cycles | 1300 cycles | 240 days |
| Example 33 | 2000 cycles | 1400 cycles | 270 days |
| Example 34 | 1250 cycles | 1150 cycles | 190 days |
| Example 35 | 1000 cycles | 800 cycles | 132 days |
| Example 36 | 1200 cycles | 900 cycles | 145 days |
| Example 37 | 1500 cycles | 1000 cycles | 160 days |
| Example 38 | 1600 cycles | 1200 cycles | 170 days |
| Example 39 | 2500 cycles | 1400 cycles | 390 days |
| Example 40 | 2800 cycles | 1500 cycles | 380 days |
| Comparative | 1600 cycles | 800 cycles | 250 days |
| example 1 | | | |
| Comparative example 2 | 1100 cycles | 800 cycles | 190 days |
| Comparative example 3 | 800 cycles | 500 cycles | 120 days |

It can be seen from the test results in Table 3 that when the positive electrode active material comprises the first positive electrode active material with a molecular formula of M1ₓMn_{y}M2_{z}OₐA_{b}, the negative effects of volume expansion of silicon-based materials and tin-based materials can be reduced, such that the secondary battery can have significantly improved cycling performance and storage performance.

In addition, when the secondary battery further satisfies either or both of the mass content percentage of the first positive electrode active material of 2%-70% and the mass ratio of the first positive electrode active material to the first negative electrode active material of (0.48-0.70) : 1, the secondary battery can have a high energy density as well as further improved cycling performance and storage performance.

## Claims

1. A secondary battery, comprising a negative electrode plate and a positive electrode plate, wherein the negative electrode plate comprises a negative electrode current collector and a negative electrode film layer provided on at least one surface of the negative electrode current collector, the negative electrode film layer comprising a negative electrode active material, and the positive electrode plate comprises a positive electrode current collector and a positive electrode film layer provided on at least one surface of the positive electrode current collector, the positive electrode film layer comprising a positive electrode active material,
wherein
the negative electrode active material comprises a first negative electrode active material, which is selected from one or more of a silicon-based material and a tin-based material, and
the positive electrode active material comprises a first positive electrode active material, which has a molecular formula of M1ₓMn_{y}M2_{z}OₐA_{b}, wherein M1 represents one or both of Mg and Al, and M2 represents one or both of Co and Ni, A represents one or more of N, P and S, 0 < x ≤ 3, 0 < y ≤ 6, 0 ≤ z ≤ 6, 0 < y + z ≤ 8, 0 < a ≤ 12, 0 ≤ b ≤ 12, and 0 < a + b ≤ 15.

2. The secondary battery according to claim 1, wherein the mass content percentage of the first positive electrode active material is 2%-70%, optionally 2.4%-55%, based on the total mass of the positive electrode film layer.

3. The secondary battery according to claim 1 or 2, wherein the mass ratio of the first positive electrode active material to the first negative electrode active material is (0.48-0.70) : 1.

4. The secondary battery according to any one of claims 1-3, wherein the mass content percentage of the first negative electrode active material is 5%-50%, optionally 5%-29%, based on the total mass of the negative electrode film layer.

5. The secondary battery according to any one of claims 1-4, wherein the first positive electrode active material satisfies at least one of conditions (1) to (4):
(1) 0 < y ≤ 3,
(2) 0 < z ≤ 1,
(3) 0 < b ≤ 5, and
(4) 0 < b ≤ 1.

6. The secondary battery according to any one of claims 1-5, wherein the first positive electrode active material has a spinel structure and/or a layered structure.

7. The secondary battery according to any one of claims 1-6, wherein the first positive electrode active material comprises one or more of MgMn₂O₄, Mg₂Mn₂O₄, Al₂Mn₂O₅, MgAlMnO₄, Mg₂AlMnO₅, Mg₂Mn_{1.5}Ni_{0.5}O₄, and Mg₂Mn_{1.5}Ni_{0.5}O_{3.2}S_{0.8}.

8. The secondary battery according to any one of claims 1-7, wherein the first positive electrode active material has a volume-average particle size Dv50 of 8 µm-20 µm, wherein Dv50 is measured as described in the description.

9. The secondary battery according to any one of claims 1-8, wherein the first positive electrode active material has a specific surface area of 0.2 m²/g-0.9 m²/g, wherein the specific surface area is measured as described in the description.

10. The secondary battery according to any one of claims 1-9, wherein
the silicon-based material comprises one or more of elemental silicon, silicon oxides, silicon carbon composites, silicon nitrogen composites and silicon alloy materials, and/or
the tin-based material comprises one or more of elemental tin, tin oxides, tin carbon composites and tin alloy materials.

11. The secondary battery according to any one of claims 1-10, wherein the secondary battery is a lithium ion battery, a sodium ion battery, a potassium ion battery, a zinc ion battery, a calcium ion battery, or a barium ion battery.

12. A battery module, comprising a secondary battery according to any one of claims 1-11.

13. A battery pack, comprising one of a secondary battery according to any one of claims 1-11, or a battery module according to claim 12.

14. A power consuming device, comprising at least one of a secondary battery according to any one of claims 1-11, a battery module according to claim 12, or a battery pack according to claim 13.

## Patentansprüche

1. Sekundärbatterie, umfassend eine Negativelektrodenplatte und eine Positivelektrodenplatte, wobei die Negativelektrodenplatte einen Negativelektroden-Stromsammler und eine auf mindestens einer Oberfläche des Negativelektroden-Stromsammlers vorgesehene Negativelektroden-Filmschicht umfasst, wobei die Negativelektroden-Filmschicht ein Negativelektroden-Aktivmaterial umfasst, und die Positivelektrodenplatte einen Positivelektroden-Stromsammler und eine auf mindestens einer Oberfläche des Positivelektroden-Stromsammlers vorgesehene Positivelektroden-Filmschicht umfasst, wobei die Positivelektroden-Filmschicht ein Positivelektroden-Aktivmaterial umfasst,
wobei
das Negativelektroden-Aktivmaterial ein erstes Negativelektroden-Aktivmaterial umfasst, das aus einem oder mehreren von einem Material auf Siliciumbasis und einem Material auf Zinnbasis ausgewählt ist, und
das Positivelektroden-Aktivmaterial ein erstes Positivelektroden-Aktivmaterial umfasst, das eine Summenformel M1ₓMn_{y}M2_{z}OₐA_{b} aufweist, wobei M1 für eines oder beide von Mg und Al steht und M2 für eines oder beide von Co und Ni steht, A für eines oder mehrere von N, P und S steht, 0 < x ≤ 3, 0 < y ≤ 6, 0 ≤ z ≤ 6, 0 < y + z ≤ 8, 0 < a ≤ 12, 0 ≤ b ≤ 12 und 0 < a + b ≤ 15.

2. Sekundärbatterie nach Anspruch 1, wobei der Massengehalt-Prozentanteil des ersten Positivelektroden-Aktivmaterials 2 % - 70 %, gegebenenfalls 2,4 % - 55 %, bezogen auf die Gesamtmasse der Positivelektroden-Filmschicht, beträgt.

3. Sekundärbatterie nach Anspruch 1 oder 2, wobei das Massenverhältnis von erstem Positivelektroden-Aktivmaterial zu erstem Negativelektroden-Aktivmaterial (0,48 - 0,70) : 1 beträgt.

4. Sekundärbatterie nach einem der Ansprüche 1-3, wobei der Massengehalt-Prozentanteil des ersten Negativelektroden-Aktivmaterials 5 % - 50 %, gegebenenfalls 5 % - 29 %, bezogen auf die Gesamtmasse der Negativelektroden-Filmschicht, beträgt.

5. Sekundärbatterie nach einem der Ansprüche 1-4, wobei das erste Positivelektroden-Aktivmaterial mindestens eine der Bedingungen (1) bis (4) erfüllt:
(1) 0 < y ≤ 3,
(2) 0 < z ≤ 1,
(3) 0 < b ≤ 5 und
(4) 0 < b ≤ 1.

6. Sekundärbatterie nach einem der Ansprüche 1-5, wobei das erste Positivelektroden-Aktivmaterial eine Spinellstruktur und/oder eine Schichtstruktur aufweist.

7. Sekundärbatterie nach einem der Ansprüche 1-6, wobei das erste Positivelektroden-Aktivmaterial eines oder mehrere von MgMn₂O₄, Mg₂Mn₂O₄, Al₂Mn₂O₅, MgAlMnO₄, Mg₂AlMnO₅, Mg₂Mn_{1,5}Ni_{0,5}O₄ und Mg₂Mn_{1,5}Ni_{0,5}O_{3,2}S_{0,8} umfasst.

8. Sekundärbatterie nach einem der Ansprüche 1-7, wobei das erste Positivelektroden-Aktivmaterial eine volumenmittlere Teilchengröße Dv50 von 8 µm - 20 µm aufweist, wobei Dv50 gemäß den Angaben in der Beschreibung gemessen wird.

9. Sekundärbatterie nach einem der Ansprüche 1-8, wobei das erste Positivelektroden-Aktivmaterial eine spezifische Oberfläche von 0,2 m²/g - 0,9 m²/g aufweist, wobei die spezifische Oberfläche gemäß den Angaben in der Beschreibung gemessen wird.

10. Sekundärbatterie nach einem der Ansprüche 1-9, wobei
das Material auf Siliciumbasis eines oder mehrere von elementarem Silicium, Siliciumoxiden, Silicium-Kohlenstoff-Verbundwerkstoffen, Silicium-Stickstoff-Verbundwerkstoffen und Siliciumlegierungsmaterialien umfasst und/oder
das Material auf Zinnbasis eines oder mehrere von elementarem Zinn, Zinnoxiden, Zinn-Kohlenstoff-Verbundwerkstoffen und Zinnlegierungsmaterialien umfasst.

11. Sekundärbatterie nach einem der Ansprüche 1-10, wobei es sich bei der Sekundärbatterie um eine Lithiumionenbatterie, eine Natriumionenbatterie, eine Kaliumionenbatterie, eine Zinkionenbatterie, eine Calciumionenbatterie oder eine Bariumionenbatterie handelt.

12. Batteriemodul, umfassend eine Sekundärbatterie nach einem der Ansprüche 1-11.

13. Batteriepack, umfassend eine Sekundärbatterie nach einem der Ansprüche 1-11 oder ein Batteriemodul nach Anspruch 12.

14. Stromverbrauchende Vorrichtung, umfassend eine Sekundärbatterie nach einem der Ansprüche 1-11, ein Batteriemodul nach Anspruch 12 und/oder ein Batteriepack nach Anspruch 13.

## Revendications

1. Batterie rechargeable, comprenant une plaque d'électrode négative et une plaque d'électrode positive, la plaque d'électrode négative comprenant un collecteur de courant d'électrode négative et une couche de film d'électrode négative disposée sur au moins une surface du collecteur de courant d'électrode négative, la couche de film d'électrode négative comprenant un matériau actif d'électrode négative, et la plaque d'électrode positive comprenant un collecteur de courant d'électrode positive et une couche de film d'électrode positive disposée sur au moins une surface du collecteur de courant d'électrode positive, la couche de film d'électrode positive comprenant un matériau actif d'électrode positive,
dans laquelle
le matériau actif d'électrode négative comprend un premier matériau actif d'électrode négative, qui est choisi parmi un matériau à base de silicium et/ou un matériau à base d'étain, et
le matériau actif d'électrode positive comprend un premier matériau actif d'électrode positive, qui a pour formule moléculaire M1ₓMn_{y}M2_{z}OₐA_{b}, dans laquelle M1 représente Mg et/ou Al et M2 représente Co et/ou Ni, A représente un ou plusieurs éléments parmi N, P et S, 0 < x ≤ 3, 0 < y ≤ 6, 0 ≤ z ≤ 6, 0 < y + z ≤ 8, 0 < a ≤ 12, 0 ≤ b ≤ 12, et 0 < a + b ≤ 15.

2. Batterie rechargeable selon la revendication 1, dans laquelle le pourcentage de teneur massique du premier matériau actif d'électrode positive est de 2 %-70 %, éventuellement 2,4 %-55 %, rapporté à la masse totale de la couche de film d'électrode positive.

3. Batterie rechargeable selon la revendication 1 ou 2, dans laquelle le rapport massique entre le premier matériau actif d'électrode positive et le premier matériau actif d'électrode négative est de (0,48-0,70): 1.

4. Batterie rechargeable selon l'une quelconque des revendications 1 à 3, dans laquelle le pourcentage de teneur massique du premier matériau actif d'électrode négative est de 5 %-50 %, éventuellement 5 %-29 %, rapporté à la masse totale de la couche de film d'électrode négative.

5. Batterie rechargeable selon l'une quelconque des revendications 1 à 4, dans laquelle le premier matériau actif d'électrode positive satisfait au moins une des conditions (1) à (4) :
(1) 0 < y ≤ 3,
(2) 0 < z ≤ 1,
(3) 0 < b ≤ 5, et
(4) 0 < b ≤ 1.

6. Batterie rechargeable selon l'une quelconque des revendications 1 à 5, dans laquelle le premier matériau actif d'électrode positive a une structure spinelle et/ou une structure stratifiée.

7. Batterie rechargeable selon l'une quelconque des revendications 1 à 6, dans lequel le premier matériau actif d'électrode positive comprend un ou plusieurs composés parmi MgMn₂O₄, Mg₂Mn₂O₄, Al₂Mn₂O₅, MgAlMnO₄, Mg₂AlMnO₅, Mg₂Mn_{1,5}Ni_{0,5}O₄, et Mg₂Mn_{1,5}Ni_{0,5}O_{3,2}S_{0,8}.

8. Batterie rechargeable selon l'une quelconque des revendications 1 à 7, dans laquelle le premier matériau actif d'électrode positive à une taille de particules moyenne en volume Dv50 de 8 µm-20 µm, la Dv50 étant mesurée comme décrit dans la description.

9. Batterie rechargeable selon l'une quelconque des revendications 1 à 8, dans laquelle le premier matériau actif d'électrode positive a une surface spécifique de 0,2 m²/g-0,9 m²/g, la surface spécifique étant mesurée comme décrit dans la description.

10. Batterie rechargeable selon l'une quelconque des revendications 1 à 9, dans laquelle
le matériau à base de silicium en comprend un ou plusieurs parmi le silicium élémentaire, les oxydes de silicium, les composites silicium-carbone, les composites silicium-azote et les matériaux en alliage de silicium, et/ou
le matériau à base d'étain en comprend un ou plusieurs parmi l'étain élémentaire, les oxydes d'étain, les composites étain-carbone et les matériaux en alliage d'étain.

11. Batterie rechargeable selon l'une quelconque des revendications 1 à 10, la batterie rechargeable étant une batterie aux ions lithium, une batterie aux ions sodium, une batterie aux ions potassium, une batterie aux ions zinc, une batterie aux ions calcium, ou une batterie aux ions baryum.

12. Module de batterie, comprenant une batterie rechargeable selon l'une quelconque des revendications 1 à 11.

13. Bloc-batterie, comprenant soit une batterie rechargeable selon l'une quelconque des revendications 1 à 11, soit un module de batterie selon la revendication 12.

14. Dispositif consommant de l'électricité, comprenant une batterie rechargeable selon l'une quelconque des revendications 1 à 11, et/ou un module de batterie selon la revendication 12, et/ou un bloc-batterie selon la revendication 13.
